# EUROPÄISCHE PATENTSCHRIFT

(11) **EP 0 888 819 B1**
(45) Veröffentlichungstag und Bekanntmachung des Hinweises auf die Patenterteilung: **03.08.2005**
(21) Anmeldenummer: 98108866.9
(22) Anmeldetag: 15.05.1998
(51) Int. Cl.: B03D 1/02, B03D 1/14, D21B 1/32, D21F 1/70

(54) **Verfahren und Anlage zur Entfernung von Störstoffen aus einer wässrigen Faserstoffsuspension**
Method and plant for removing impurities from an aqueous suspension of fibrous matter
Procédé et installation pour l'enlèvement des impuretés d'une suspension aqueuse de matières

(30) Priorität: 03.07.1997 DE 19728393
(43) Veröffentlichungstag der Anmeldung: 07.01.1999
(73) Patentinhaber: Voith Paper Patent GmbH, 89522 Heidenheim (DE)
(72) Erfinder: Britz, Herbert, 88214 Ravensburg-Weissenau (DE); Holik, Herbert, 88213 Ravensburg (DE); Kemper, Martin, 88213 Ravensburg (DE); Martin, Thomas, 89129 Langenau (DE); Selbherr, Anton, 88518 Herbertingen (DE); Selder, Harald, 88281 Schlier (DE)

(56) Entgegenhaltungen:
- EP-A- 0 537 416
- DE-A- 4 426 159
- US-A- 5 417 806
- DATABASE WPI Section Ch, Week 8540 Derwent Publications Ltd., London, GB; Class F09, AN 85-245072 [25] XP002041309 -& JP 60 134090 A (MORISANE M) , 17. Juli 1985

## Beschreibung

Die Erfindung betrifft ein Verfahren zur Entfernung von Störstoffen aus einer wässrigen Faserstoffsuspension mit Hilfe mindestens zweier direkt oder indirekt aufeinanderfolgender Flotationsschritte.

Verfahren der genannten Art werden verwendet, um aus einer faserstoffhaltigen Faserstoffsuspension zumindest einen Teil der darin suspendierten unerwünschten Feststoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seines eher hydrophilen Charakters in der Faserstoffsuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Da durch das hier angesprochene Flotationsverfahren Fasern von Verunreinigungen getrennt und nicht alle Faserstoffpartikel aussortiert werden, spricht man von selektiver Flotation. Der ebenfalls benutzte Begriff "Flotationsdeinking" wird in der Regel nicht nur für die Entfernung von Druckfarbenpartikeln (ink = Druckfarbe) sondern auch allgemeiner für die selektive Flotation von Verunreinigungen aus Faserstoffsuspensionen verwendet.

Besonders guten Effekt haben Reinigungsverfahren mit zwei Teilschritten, einer Vor- und einer Nachflotation und dazwischenliegender mechanischer Stoffbehandlung, wie z.B. erschienen im Wochenblatt für Papierfabrikation 10 - 1983, beschrieben ist.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Störstoffpartikel durch Flotation zu entfernen. Ungünstig ist es allerdings, wenn das Größenspektrum der zu entfernenden Störstoffpartikel sehr breit ist. In solchen Fällen treten oft Probleme auf, da die Flotationsanlagen nicht immer das ganze Größenspektrum erfassen können.

In der EP 0 537 416 A1 wird ein Verfahren zur Behandlung einer Faserstoffsuspension beschrieben. Die Störstoffe werden zunächst in einer Primärflotation entfernt, in der ein Flotationsschaum mit unerwünschten Störstoffen gebildet wird. Dieser Flotationsschaum, also der Rejekt der Primär-Flotation, wird anschließend in eine weitere Flotationsstufe geführt. Eine solche Kombination von Flotationsstufen wird auch als Primär- und Sekundärflotation bezeichnet. Der Gutstoff der Sekundärstufe gelangt hier in einen Reinigungsschritt. Vorzugsweise handelt es sich dabei um einen Waschvorgang. Der Gutstoff der Primärflotation wird in eine nicht näher beschriebene nachfolgende Faserstoffaufbereitung weitergeführt.

Bekanntlich wird bei der Flotation die Neigung von Gasblasen genutzt, in einer Flüssigkeit gegen das Schwerefeld aufzusteigen. Dieses Schwerefeld bildet sich zunächst auf Grund der Erdgravitation, kann aber durch Fliehkräfte wesentlich verstärkt werden. In der DE 44 26 159 A1 wird ein Verfahren beschrieben, bei dem die zu reinigende Faserstoffsuspension zunächst in einen mit Fliehkräften arbeitenden Flotationszyklon gelangt. Die so gereinigte Suspension, also der Gutstoff, wird dann ohne weitere Bearbeitung in Flotationszellen herkömmlicher Bauart, die im wesentlichen allein aufgrund der Schwerkraft arbeiten, erneut flotiert. Der Gutstoff dieser Flotationszellen wird in einem Hydrozyklon nachbehandelt, der in der üblichen Weise große Schmutzpartikel als Schwerschmutz abtrennt. Der Flotationsschaum hingegen wird in einem weiteren Flotationszyklon, der die Sekundärstufe bildet, erneut bearbeitet. Dabei strömt er durch einen statischen Mischer, der eine stark turbulente Strömung erzeugt, wodurch eine gute Luftblasendurchmischung erreicht wird. Der Flotationszyklon der Sekundärstufe hat das Ziel, die Störstoffe weiter anzureichern und einen Gutstoff zu bilden, der in die Flotationszellen zurückgeführt wird, die auch den Gutstoff des ersten Flotationszyklons aufnehmen. Dieses Verfahren arbeitet zwar mit der Kombination unterschiedlicher Flotationsschritte, ist aber dennoch in einigen Fällen nicht ausreichend, um einen vollständig weißen Deinkingstoff zu erzeugen.

Der Erfindung liegt daher die Aufgabe zugrunde, ein Flotationsverfahren zu schaffen, mit dem das Spektrum der ausflotierten Störstoffpartikel erweitert wird.

Diese Aufgabe wird durch die kennzeichnenden Merkmale des Anspruchs 1 in vollem Umfang gelöst.

Mit Hilfe des erfindungsgemäßen Verfahrens wird nicht angestrebt, wie es etwa im eingangs genannten Fachaufsatz vorgeschlagen wird, durch Ausgestaltung der einzelnen Flotationsapparate das Größenspektrum zu verbreitern, das bei der Flotation erfaßbar ist. Vielmehr werden mindestens zwei auf einen jeweiligen speziellen Größenbereich Flotationsapparate das Größenspektrum zu verbreitern, das bei der Flotation erfaßbar ist. Vielmehr werden mindestens zwei auf einen jeweiligen speziellen Größenbereich optimierte Teilschritte hintereinandergeschaltet. Beispielsweise werden in einem Teilschritt die in der Faserstoffsuspension vorliegenden kleineren Partikel durch ein darauf optimal abgestimmtes Starkfeld-Flotationsgerät ausflotiert. Dabei lassen sich besonders solche Druckfarbenpartikel erfassen, die durch Binder auf Ölbasis mit den Fasern verbunden waren. In Fällen, in denen eine mit umlaufenden Endlossieben ausgestattete Eindicker- oder Waschvorrichtung (z.B. gemäß DE 30 05 681) folgt, könnten solche Druckfarbenpartikel die Siebe verschmutzen und zu Störungen führen. Außerdem neigen sie grundsätzlich dazu, bei hoher mechanischer Beanspruchung - also z.B. in einem nachgeschalteten Disperger - auf die Fasern so aufgerieben zu werden, daß sie dann nur noch schwer oder gar nicht mehr entfernbar wären. In beiden Fällen kann das Verwenden der vorgeschalteten Starkfeld-Flotation wirksame Abhilfe schaffen.

Auch innerhalb der Vorflotation, also noch vor der mechanischen Bearbeitung, können größere Partikel zusätzlich in einer Schwachfeldflotation entfernt werden. Dann ist es von Vorteil, die Reihenfolge so zu wählen, daß mit der Schwachfeldflotation begonnen wird, um zuerst die größeren Partikel zu entfernen. Diese würden nämlich sonst bei der Starkfeldflotation unnötigerweise Luftblasen besetzen, ohne ausgetragen zu werden. Grundsätzlich ist diese Reihenfolge aber beliebig. Ähnliche Überlegungen sind auch bei einer zweiteiligen Nachflotation anzustellen.

In anderen Fällen, bei denen in der Faserstoffsuspension keine solchen Feinpartikel vorliegen, die bei der mechanischen Bearbeitung nachteilig verändert werden, kann die Vorflotation lediglich eine Schwachfeldflotation sein, z.B. im Erdfeld arbeiten, und die Nachflotation mit starkem, z.B. Zentrifugalfeld, Schwachfeldflotation oder Kombination, ausgeführt werden.

Nach dem ersten Flotationsschritt, der Vorflotation, werden die noch nicht von den Fasern abgetrennten oder sonstwie fixierten Störstoffpartikel mechanisch abgelöst.

Dabei muß wegen des Fehlens der bereits entfernten Partikel nicht mehr befürchtet werden, daß diese zerkleinert oder in die Fasern eingerieben werden und dadurch nicht mehr oder zumindest aufwendiger abzuscheiden sind.

Die Erfindung wird erläutert anhand von Zeichnungen. Dabei zeigen:
- Fig. 1: ein Schema des erfindungsgemäßen Verfahrens;
- Fig. 2 bis 5: je eine Verfahrensvariante;
- Fig. 6 a und b: schematisch: Ein Starkfeld-Flotationsgerät in Seitenansicht und Aufsicht;
- Fig. 7: schematisch: Eine erfindungsgemäße Anlage.

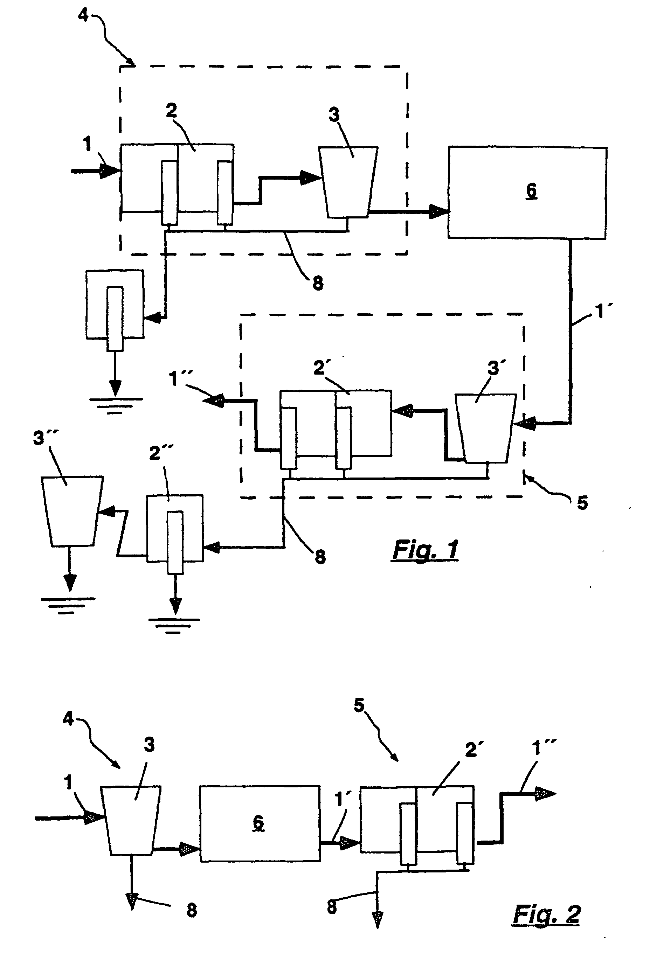

Gemäß Fig. 1 wird die störstoffhaltige, wässrige Faserstoffsuspension 1 in der Vorflotation 4 gereinigt, wobei diese in zwei nacheinanderfolgende Teilschritte aufgeteilt ist, nämlich eine stromaufwärtige Schwachfeldflotation 2 und eine stromabwärtige Starkfeldflotation 3. Die Reihenfolge dieser beiden Teilschritte ist zwar - wie bereits ausgeführt wurde - in den meisten Fällen optimal, sie kann aber in anderen Fällen auch vertauscht sein. Die so vorgereinigte Suspension gelangt anschließend in eine mechanische Bearbeitung 6, bei der noch einige Störstoffe abgelöst werden. Mit Vorteil handelt es sich dabei um eine Hochkonsistenz-Dispergierung, welche bei Normaltemperaturen oder auch bei Temperaturen um 100° oder darüber ausgeführt sein kann. Apparativ können Zahnscheiben-Disperger oder -Kneter - um nur diese zu nennen - eingesetzt werden. Die mechanische behandelte Faserstoffsuspension 1' wird anschließend in die Nachflotation 5 geführt, die im wesentlichen dazu dient, die vorher freigelegten, bzw. abgelösten Störstoffparbkel durch Flotation zu entfernen. In dem hier dargestellten Beispiel ist auch die Nachflotation 5 in zwei Teilschritte unterteilt, einer stromaufliegenden Starkfeldflotation 3' und einer folgenden Schwachfeldflotation 2'. Auch hier ist wiederum eine andere Reihenfolge denkbar. Wegen des in der Regel kleineren Größenspektrums der Störstoffe im Vergleich zur Faserstoffsuspension 1 in der Vorflotation kann es in vielen Fällen genügen, in der Nachflotation 5 lediglich die Starkfeldflotation 3' einzusetzen. Die Faserstoffsuspension 1", die am Ende der Nachflotation als Gutstoff anfällt, ist bei zweckmäßig durchgeführtem Verfahren von hoher Weiße und Sauberkeit. Wie an sich bekannt, wird der Flotationsschaum 8, der sich bei der Vor- bzw. Nachflotation bildet, noch einmal einer weiteren Flotationsbehandlung unterzogen, um die Störstoffe zu konzentrieren und die unbeabsichtigterweise mit dem Schaum abgeführten Fasern zurückzugewinnen. Auch bei diesen als Sekundärstufe bezeichneten Trennschritten ist mit Vorteil die Kombination von verschiedenen Flotationsprinzipien anwendbar. So wird exemplarisch für die Sekundärstufe der Nachflotation 5 eine Reihenschaltung von Schwachfeldflotation 2" und Starkfeldlotation 3" gezeigt.

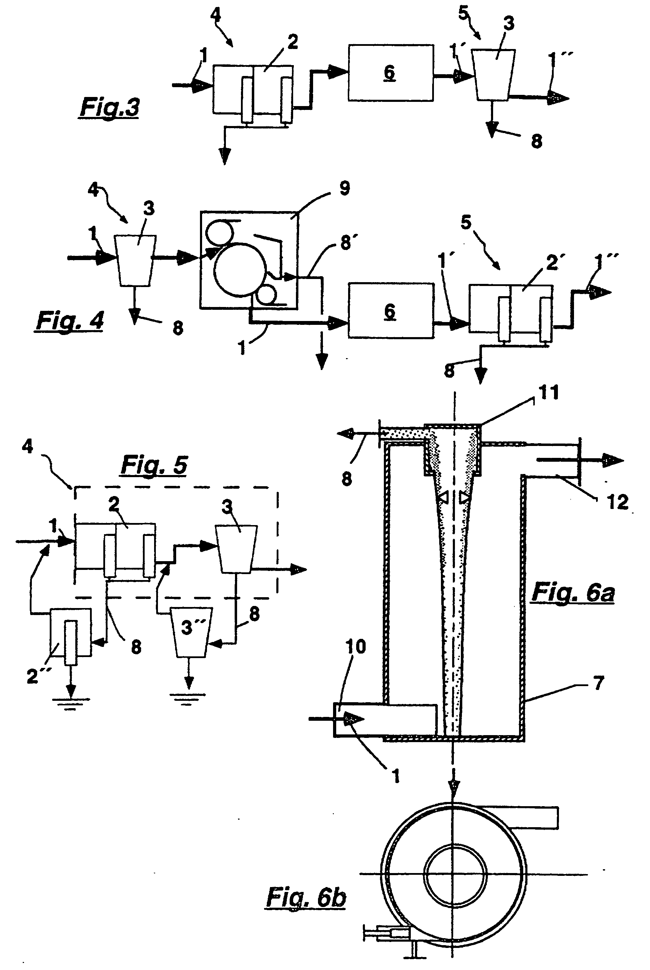

Fig. 2 ist ein vereinfachtes Schema, bei dem die Vorflotation 4 lediglich in einer Starkfeldflotation 3 und die Nachflotation 5 in einer Schwachfeldflotation 2' erfolgt. Eine solche Schaltung ist besonders sinnvoll, wenn die in der Faserstoffsuspension 1 vorhandenen, bereits abgelösten Störstoffpartikel von relativ kleiner Größe sind und in der mechanischen Bearbeitung 6 nachteilig verändert würden. Die nach der Bearbeitung 6 folgende Nachflotation 5 ist dann geeignet, die in der mechanischen Bearbeitungsstufe von den Fasern abgelösten Partikel von relativ großer Abmessung aufzuflotieren. Dasselbe gilt für solche Partikel, z.B. Kleber, die durch die mechanische Bearbeitung 6 erst eine flotationsaktive Form oder Oberflächenstruktur erhalten. In anderen Fällen ist die in Fig. 3 gezeigte Schaltung sehr vorteilhaft, insbesondere wenn in der Faserstoffsuspension 1 eine entsprechend große Menge von großen, aber noch flotierbaren Störstoffpartikeln vorliegt, welche in einer mechanischen Bearbeitungsstufe zerkleinert und/oder in die Fasern eingerieben würden.

Gemäß dem Schema der Fig. 4 ist zwischen der Vorflotation 4 und der mechanischen Bearbeitung 6 ein Waschvorgang 9 zwischengeschaltet, um feinste Partikel zusammen mit dem Filtrat 8' auszuwaschen, also weitgehend unabhängig von ihrer Hydrophobie/Hydrophilie. Die hierzu erforderlichen Filter bzw. Siebe sind durch die davorliegende Starkfeld-Flotation, die besonders gut die klebenden unstabilen und weichen Störstoffe erfaßt, gegen Verschmutzen geschützt.

In Fig. 5 ist eine in vielen Fällen vorteilhafte Ausgestaltung der Sekundärstufe gezeigt, bei der der Schaum 8, der z.B. aus der Vorflotation 4 stammt, in jeweils solche Flotationsvorrichtungen, die nach demselben Flotationsprinzip bezüglich des Schwerefeldes arbeiten, eingeleitet. So wird im schwachen Schwerefeld erzeugter Flotationsschaum ebenfalls mit einer Schwachfeldflotation und der aus der Starkfeldflotation ebenfalls mit einer Starkfeldflotation nachbehandelt. Ähnliche Überlegungen sind selbstverständlich auch für die Nachflotation möglich, auch wenn sie hier nicht zeichnerisch dargestellt sind.

Die Fig. 6 a zeigt exemplarisch eine Flotationsvorrichtung, mit der eine Starkfeldflotation ausgeführt werden kann. Man erkennt ein im wesentlichen zylindrisches Gefäß mit einer in sich geschlossenen Wandung 7. Durch den tangentialen Einlauf 10 wird die Faserstoffsuspension 1 eingeführt, so daß sich zusammen mit der Krümmung der Wandung 7 eine Rotationsströmung ergibt. Die Zugabe und Vermischung der Flotationsluft in die Faserstoffsuspension ist hier nicht dargestellt, da hinreichend bekannt. Infolge des Zentrifugalfeldes sammelt sich der Flotationsschaum im wesentlichen in der Mitte des Flotationsapparates. Er fließt in axialer Richtung nach oben ab, wobei in dem hier gezeigten Beispiel die Transportströmung der Faserstoffsuspension durch das Gefäß ebenfalls axial nach oben verläuft. Daher befinden sich sowohl der Schaumabzug 11 als auch der Gutstoffabzug 12 im oberen Bereich der Flotationsvorrichtung. Zur Verdeutlichung ist die in Fig. 6 a gezeigte Flotationsvorrichtung in Fig. 6 b in Aufsicht dargestellt.

In vielen Fällen sind für einen Verfahrensschritt, z.B. die Vorflotation, Nachflotation oder Sekundärstufe, mehrere hintereinandergeschaltete Flotationsvorrichtungen vorzusehen.

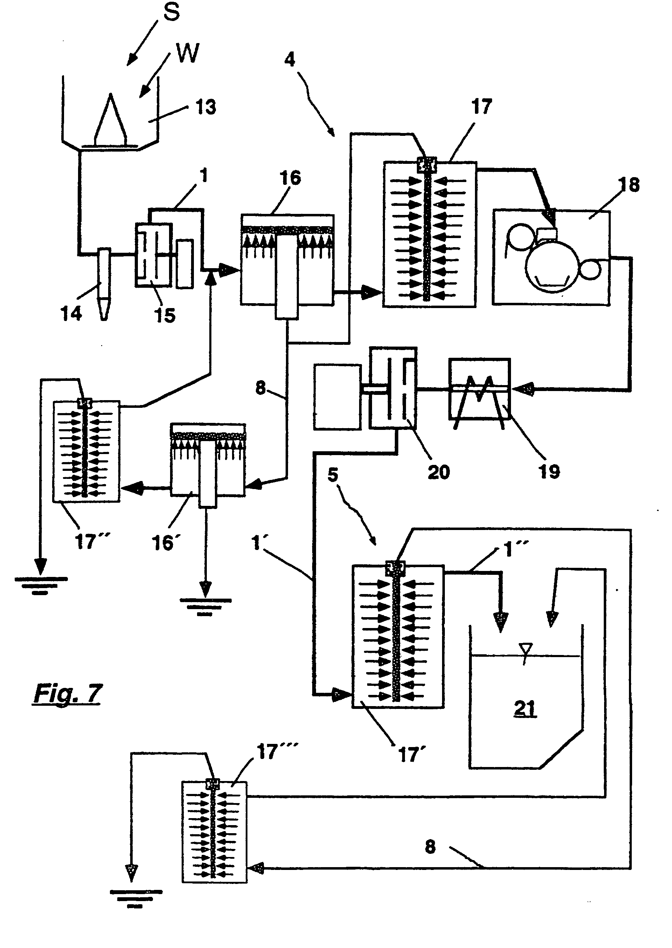

In Fig. 7 ist schematisch eine Anlage dargestellt, mit der das Verfahren in vorteilhafter Weise ausgeführt werden kann. Man erkennt einen Stofflöser (13), hier als Hochkonsistenzstofflöser ausgeführt, der mit einer Stoffdichte von mindestens 12 % den eingetragenen Papierfaserstoff S mit dem Wasser W vermischt, wobei die für die Flotation benötigten Chemikalien zumindest teilweise zugegeben werden können. Der Stofflöser 13 kann so betrieben werden, daß eine weitgehende Entstippung des Papierstoffes erfolgt. Es ist aber auch denkbar, das in einem nachgeschalteten Entstipper 15 durchzuführen. Auflösung, eventuelle Chemikalienwirkung und Entstippung müssen so weit vorgenommen werden, daß zumindest ein nennenswerter Teil der enthaltenen Störstoffe, z.B. der Druckfarbenpartikel freigelegt ist. In der Regel, insbesondere bei Verwendung von Altpapier, wird auch ein Hydrozyklon 14 sinnvoll sein, um grobe Schwerteile auszuscheiden. Die verschiedenen Aggregate der dargestellten Anlage erfordern in der Regel Suspensionen mit bestimmten Stoffdichten, also Trockengehalten. Maßnahmen zu deren Einstellung sind dem Fachmann bekannt und werden hier nur in Sonderfällen zeichnerisch dargestellt. Die ausreichend entstippte und gereinigte Faserstoffsuspension 1 gelangt in eine im Erdschwerefeld betriebene Flotationszelle 16, bei der die mit Luft vermischte Suspension einen Schaum 8 bildet, der abgeführt wird. Der Gutstoff der Flotationszellen 16 wird in den Flotationszyklon 17 geführt, dessen Wirkung als Starkfeld-Flotation bereits beschrieben worden ist. Der darin anfallende Flotationsschaum 8 gelangt hier zusammen mit dem der Flotationszelle 16 in die Sekundärstufe. Der Gutstoff wird in der Eindickvorrichtung 18, z.B. einer Siebpresse eingedickt, anschließend in der Stofferhitzungsvorrichtung 19 auf die erforderliche Temperatur gebracht und dann im Disperger 20 dispergiert. Wie bereits beschrieben, dient der Disperger 20 u.a. dazu, die noch an den Fasern anhaftenden Störstoffe abzulösen, so daß in dem nachgeschalteten Flotationszyklon 17' auch diese aufflotiert und zusammen mit dem Schaum 8 entfernt werden können. Der Gutstoff des Flotationszyklons 17 kommt in die Vorratsbütte 21 und steht als weißer, sauberer Papierfaserstoff zur Erzeugung neuen Papiers zur Verfügung. Der in der Nachflotation 5 anfallende Schaum 8 gelangt in eine weitere Sekundärstufe. In dem hier gezeigten Beispiel ist die Sekundärstufe der Vorflotation 4 wiederum mit zwei verschieden wirkenden Flotationsvorrichtungen - nämlich einer im Erdschwerefeld betriebenen Flotationszelle 16' und einem sich anschließenden Flotationszyklon 17" - ausgestattet. Die Sekundärflotationsstufe der Nachflotation 5 enthält lediglich mindestens einen Flotationszykion 17"'. Das hier dargestellte Verfahren ist als Verfahrensbeispiel zu verstehen; entsprechend den vorliegenden Ansprüchen können auch die Anlagen anders ausgestaltet sein.

## Patentansprüche

1. Verfahren zur Entfernung von Störstoffen aus einer wässrigen Faserstoffsuspension (1, 1') mit Hilfe mehrerer selektiver Flotationsschritte, zwischen denen mindestens eine mechanische Bearbeitung (6) vorgenommen wird, bei der noch an den Fasern haftende Störstoffe abgelöst werden,
**dadurch gekennzeichnet,**
**daß** die wässrige Faserstoffsuspension (1) in mindestens zwei nacheinanderfolgenden Teilschritten flotiert wird, von denen einer eine im Erdgravitationsfeld durchgeführte Schwachfeldflotation (2, 2') ist und ein anderer eine durch Zentrifugalkräfte mit mindestens zweifacher Erdbeschleunigung durchgeführte Starkfeldflotation (3, 3'),
wobei die im vorherigen Teilschritt gereinigte Faserstoffsuspension in den folgenden Teilschritt geführt wird.

2. Verfahren nach Anspruch 1,
**dadurch gekennzeichnet,**
**daß** eine Schwachfeldflotation (2, 2') einer Starkfeldflotation (3, 3') vorangeht.

3. Verfahren nach Anspruch 1 oder 2,
**dadurch gekennzeichnet,**
**daß** eine Starkfeldflotation (3, 3') einer Schwachfeldflotation (2, 2') vorangeht.

4. Verfahren nach Anspruch 2,
**dadurch gekennzeichnet,**
**daß** daß mindestens zwei Flotationsschritte, eine Vorflotation (4) und eine Nachflotation (5), aufeinanderfolgen, zwischen denen die mechanische Bearbeitung (6) vorgenommen wird, wobei die Vorflotation (4) die Starkfeldflotation (3, 3') ist und die Nachflotation (5) die Schwachfeldflotation (2).

5. Verfahren nach Anspruch 3,
**dadurch gekennzeichnet**,
**dadurch gekennzeichnet,**
**daß** mindestens zwei Flotationsschritte, eine Vorflotation (4) und eine Nachflotation (5), aufeinanderfolgen, zwischen denen die mechanische Bearbeitung (6) vorgenommen wird, wobei die Vorflotation (4) die Schwachfeldflotation (2) und die Nachflotation (5) die Starkfeldflotation (3, 3').

6. Verfahren nach Anspruch 1, 2 oder 3,
**dadurch gekennzeichnet,**
**daß** mindestens zwei Flotationsschritte, eine Vorflotation (4) und eine Nachflotation (5), aufeinanderfolgen, zwischen denen die mechanische Bearbeitung (6) vorgenommen wird, wobei die Vorflotation (4) sowohl eine Starkfeldflotation (3, 3') als auch eine Schwachfeldflotation (2) enthält.

7. Verfahren nach Anspruch 1, 2 oder 3,
**dadurch gekennzeichnet,**
**daß** mindestens zwei Flotationsschritte, eine Vorflotation (4) und eine Nachflotation (5), aufeinanderfolgen, zwischen denen die mechanische Bearbeitung (6) vorgenommen wird, wobei die Nachflotation (5) sowohl eine Starkfeldflotation (3') als auch eine Schwachfeldflotation (2') enthält.

8. Verfahren nach einem der voranstehenden Ansprüchen,
**dadurch gekennzeichnet,**
**daß** der Flotationsschaum (8) mindstens eines der selektiven Flotationsschritte in eine Sekundärflotation geführt wird, die eine Kombination von Schwachfeldflotation (2") und Starkfeldflotation (3") enthält und zwar in dieser Reihenfolge.

9. Verfahren einem der voranstehenden Ansprüche,
**dadurch gekennzeichnet,**
**daß** die Starkfeldflotation (3, 3', 3") in einem durch Zentrifugalkräfte erzeugten Schwerefeld mit mindestens zehnfacher Erdbeschleunigung durchgeführt wird.

10. Verfahren nach einem der voranstehenden Ansprüche,
**dadurch gekennzeichnet,**
**daß** die Starkfeldflotation (3, 3') so ausgeführt wird, daß die zu reinigende Faserstoffsuspension (1) so an einer in sich geschlossenen, gewölbten Wandung (7) vorbeigeführt wird, daß sie eine Rotationsströmung ausführt, bei der der sich bildende Flotationsschaum (8) in das Zentrum dieser Rotationsströmung wandert und von dort axial abgeführt wird und daß dabei die Axialströmung des Schaumes (8) und die axiale Strömungskomponente der Faserstoffsuspension (1) dieselbe Richtung haben.

11. Verfahren nach einem der Ansprüche 1 bis 9,
**dadurch gekennzeichnet,**
**daß** die Starkfeldflotation (3, 3') so ausgeführt wird, daß die zu reinigende Faserstoffsuspension (1) so an einer gewölbten, in sich geschlossenen Wandung (7) vorbeigeführt wird, daß sie eine Rotationsströmung ausführt, bei der der sich bildende Flotationsschaum (8) in das Zentrum dieser Rotationsströmung wandert und von dort axial abgeführt wird und daß dabei die Axialströmung des Schaumes (8) und die axiale Strömungskomponente der Faserstoffsuspension (1) eine gegenläufige Richtung haben.

12. Verfahren nach einem der voranstehenden Ansprüchen,
**dadurch gekennzeichnet,**
**daß** die mechanische Bearbeitung (6) durch Dispergierung des auf mindestens 15% Feststoffgehalt eingedickten Faserstoffes erfolgt.

13. Anlage zur Durchführung des Verfahrens nach einem der voranstehenden Ansprüche mit einem Stofflöser 13, in dem Papierstoff (S) mit Wasser (W) vermischt und nach Durchlaufen eines Reinigungsapparates und eventuell einer Entstippungsvorrichtung als Faserstoffsuspension (1) in eine Vorflotation (4) geführt wird, deren Gutstoff in eine Eindickvorrichtung (18) und anschließend in einen Disperger (20) gelangt, dessen Stoffaustrag in eine Nachflotation (5) geführt wird,
**dadurch gekennzeichnet,**
**daß** die Faserstoffsuspension nacheinander sowohl durch mindestens eine im Erdschwerefeld betriebene, selektiv wirkende Flotationszelle (16) als auch durch mindestens einen Flotationszyklon (17, 17') geführt wird.

14. Anlage nach Anspruch 13,
**dadurch gekennzeichnet,**
**daß** sich zwischen der Eindickvorrichtung (18) und der Dispergiervorrichtung (20) eine Stofferhitzungsvorrichtung (19) befindet.

15. Anlage nach Anspruch 13 oder 14,
**dadurch gekennzeichnet,**
**daß** sowohl für die Vorflotation (4) als auch für die Nachflotation (5) jeweils Sekundärflotationsstufen zur Reinigung des in der Vor- und Nachflotation anfallenden Schaumes vorhanden sind.

16. Anlage nach Anspruch 15.
**dadurch gekennzeichnet,**
**daß** auch in mindestens einer Sekundärflotationsstufe eine Kombination von sowohl mindestens einer im Erdschwerefeld arbeitenden Flotationszelle (16') als auch mindestens einem Flotationszyklon (17", 17''') enthält.

## Claims

1. A method for removing anionic trash from an aqueous pulp suspension (1, 1') with the aid of a plurality of selective flotation steps, between which at least one mechanical processing operation (6) is performed, in which anionic trash still clinging to the fibres is detached,
**characterised in that**
the aqueous pulp suspension (1) is subjected to flotation in at least two successive partial steps, one of which is a low-intensity flotation process (2, 2') performed in the Earth's gravitational field is and another is a high-intensity flotation process (3, 3') performed by centrifugal forces with at least twice the acceleration due to gravity,
wherein the pulp suspension cleaned in the preceding partial step is passed into the following partial step.

2. A method according to Claim 1,
**characterised in that**
a low-intensity flotation process (2, 2') precedes a high-intensity flotation process (3, 3').

3. A method according to Claim 1 or 2,
**characterised in that**
a high-intensity flotation process (3, 3') precedes a low-intensity flotation process (2, 2').

4. A method according to Claim 2,
**characterised in that**
at least two flotation steps, a pre-flotation stage (4) and a post-flotation stage (5), succeed one another, between which the mechanical processing (6) is performed, the pre-flotation stage (4) being the high-intensity flotation process (3, 3') and the post-flotation stage (5) the low-intensity flotation process (2).

5. A method according to Claim 3,
**characterised in that**
at least two flotation steps, a pre-flotation stage (4) and a post-flotation stage (5), succeed one another, between which the mechanical processing (6) is performed, the pre-flotation stage (4) being the low-intensity flotation process (2) and the post-flotation stage (5) the high-intensity flotation process (3, 3').

6. A method according to Claim 1, 2 or 3,
**characterised in that**
at least two flotation steps, a pre-flotation stage (4) and a post-flotation stage (5), succeed one another, between which the mechanical processing (6) is performed, the pre-flotation stage (4) comprising both a high-intensity flotation process (3, 3') and a low-intensity flotation process (2).

7. A method according to Claim 1, 2 or 3,
**characterised in that**
at least two flotation steps, a pre-flotation stage (4) and a post-flotation stage (5), succeed one another, between which the mechanical processing (6) is performed, the post-flotation stage (5) comprising both a high-intensity flotation process (3') and a low-intensity flotation process (2').

8. A method according to one of the preceding claims,
**characterised in that**
the flotation froth (8) of at least one of the selective flotation steps is passed into a secondary flotation stage which contains a combination of low-intensity flotation process (2") and high-intensity flotation process (3"), namely **in that** order.

9. A method [according to] one of the preceding claims,
**characterised in that**
the high-intensity flotation process (3, 3', 3") is carried out in a gravitational field produced by centrifugal forces having at least ten times the acceleration due to gravity.

10. A method according to one of the preceding claims,
**characterised in that**
the high-intensity flotation process (3, 3') is performed such that the pulp suspension (1) to be cleaned is guided past a closed, curved wall (7) such that it produces a rotational flow, in which the flotation froth (8) which forms migrates into the centre of this rotational flow and is removed axially therefrom and that in so doing the axial flow of the foam (8) and the axial flow component of the pulp suspension (1) are in the same direction.

11. A method according to one of Claims 1 to 9,
**characterised in that**
the high-intensity flotation process (3, 3') is performed such that the pulp suspension (1) to be cleaned is guided past a curved, closed wall (7) such that it produces a rotational flow, in which the flotation froth (8) which forms migrates into the centre of this rotational flow and is removed axially therefrom and that in so doing the axial flow of the foam (8) and the axial flow component of the pulp suspension (1) are in opposite directions.

12. A method according to one of the preceding claims,
**characterised in that**
the mechanical processing (6) takes place by dispersion of the pulp thickened to at least 15% solids content.

13. An installation for performing the method according to one of the preceding claims, comprising a pulper 13, in which stock (S) is mixed with water (W) and after passing through a cleaning apparatus and possibly a deflaking device is passed as pulp suspension (1) into a pre-flotation stage (4), the accepted stock of which passes into a thickening device (18) and then into a disperser (20), the discharged stock of which is passed into a post-flotation stage (5),
**characterised in that**
the pulp suspension is guided in succession both through at least one selectively-operating flotation cell (16) operated in the Earth's field of gravity and through at least one flotation cyclone (17, 17').

14. An installation according to Claim 13,
**characterised in that**
a stock heating device (19) is located between the thickening device (18) and the dispersing device (20).

15. An installation according to Claim 13 or 14,
**characterised in that**
secondary flotation stages for cleaning the foam produced in the pre- and post-flotation stages are present in each case both for the pre-flotation stage (4) and for the post-flotation stage (5).

16. An installation according to Claim 15,
**characterised in that**
also at least one secondary flotation stage contains a combination of both at least one flotation cell (16') which operates in the Earth's field of gravity and at least one flotation cyclone (17", 17''').

## Revendications

1. Procédé destiné à l'élimination d'impuretés d'une suspension aqueuse de matières fibreuses (1, 1') à l'aide de plusieurs phases de flottation sélective, entre lesquelles est effectué au moins un traitement mécanique (6), lors duquel sont dissociées des impuretés adhérant encore aux fibres,
**caractérisé en ce que**
la suspension aqueuse de matières fibreuses (1) est mise à flotter dans au moins deux phases partielles de flottation successives, dont une est une flottation à champ faible (2, 2') effectuée dans un champ de gravitation terrestre, et dont une autre est une flottation à champ intensif (3, 3') effectuée par des forces centrifuges au moins égales au double de l'accélération terrestre, de la suspension de matières fibreuses épurée dans la phase partielle précédente étant amenée dans la phase partielle suivante.

2. Procédé selon la revendication 1,
**caractérisé en ce que**
une flottation à champ faible (2, 2') précède une flottation à champ intensif (3, 3').

3. Procédé selon la revendication 1 ou 2,
**caractérisé en ce que**
une flottation à champ intensif (3, 3') précède une flottation à champ faible (2, 2').

4. Procédé selon la revendication 2,
**caractérisé en ce que**
au moins deux phases de flottation se suivent, une flottation préalable (4) et une flottation postérieure (5), entre lesquelles est effectué le traitement mécanique (6), la flottation préalable (4) étant la flottation à champ intensif (3, 3'), et la flottation postérieure (5) étant la flottation à champ faible (2).

5. Procédé selon la revendication 3,
**caractérisé en ce que**
au moins deux phases de flottation se suivent, une flottation préalable (4) et une flottation postérieure (5), entre lesquelles est effectué le traitement mécanique (6), la flottation préalable (4) étant la flottation à champ faible (2), et la flottation postérieure (5) étant la flottation à champ intensif (3, 3').

6. Procédé selon la revendication 1, 2 ou 3,
**caractérisé en ce que**
au moins deux phases de flottation se suivent, une flottation préalable (4) et une flottation postérieure (5), entre lesquelles est effectué le traitement mécanique (6), la flottation préalable (4) comprenant aussi bien une flottation à champ intensif (3, 3') qu'une flottation à champ faible (2).

7. Procédé selon la revendication 1, 2 ou 3,
**caractérisé en ce que**
au moins deux phases de flottation se suivent, une flottation préalable (4) et une flottation postérieure (5), entre lesquelles est effectué le traitement mécanique (6), la flottation postérieure (5) comprenant aussi bien une flottation à champ intensif (3') qu'une flottation à champ faible (2').

8. Procédé selon l'une des revendications précédentes,
**caractérisé en ce que**
la mousse de flottation (8) de l'une au moins des phases de flottation sélectives est amenée dans une flottation secondaire, qui comprend une combinaison de flottation à champ faible (2'') et une flottation à champ intensif (3''), et ce dans cet ordre de succession.

9. Procédé selon l'une des revendications précédentes,
**caractérisé en ce que**
la flottation à champ intensif (3, 3', 3'') est effectuée dans un champ de gravitation engendré par des forces centrifuges au moins égales au décuple de l'accélération terrestre.

10. Procédé selon l'une des revendications précédentes,
**caractérisé en ce que**
la flottation à champ intensif (3, 3') est effectuée de telle sorte que la suspension de matières fibreuses (1) à épurer passe le long d'une paroi (7) cintrée en soi fermée, de telle sorte qu'elle effectue un courant rotationnel avec lequel la mousse de flottation (8) se formant migre au centre de ce courant rotationnel, et est évacuée axialement à partir de là, et **en ce que** le courant axial de la mousse (8) et la composante axiale du courant de la suspension de matières fibreuses (1) ont en l'occurrence le même sens.

11. Procédé selon l'une des revendications 1 à 9,
**caractérisé en ce que**
la flottation à champ intensif (3, 3') est effectuée de telle sorte que la suspension de matières fibreuses (1) à épurer passe le long d'une paroi (7) cintrée en soi fermée, de telle sorte qu'elle effectue un courant rotationnel avec lequel la mousse de flottation (8) se formant migre au centre de ce courant rotationnel, et est évacuée axialement à partir de là, et **en ce que** le courant axial de la mousse (8) et la composante axiale du courant de la suspension de matières fibreuses (1) ont en l'occurrence des sens inverses.

12. Procédé selon l'une des revendications précédentes,
**caractérisé en ce que**
le traitement mécanique (6) est effectué par la dispersion de la matière fibreuse épaissie à une teneur en matières solides d'au moins 15 %.

13. Installation destinée à la mise en oeuvre du procédé selon l'une des revendications précédentes, comportant un pulper de matière (13) dans lequel de la pâte à papier (S) est mélangée avec de l'eau (W) et, après avoir traversé un appareil d'épuration et éventuellement un dispositif de dépastillage, est amenée en tant que suspension de matières fibreuses (1) dans une flottation préalable (4), dont la pâte à papier acceptée arrive dans un dispositif d'épaississement (18), et ensuite dans un dispositif de dispersion (20), dont la sortie de matière est amenée dans une flottation postérieure (5),
**caractérisée en ce que**
la suspension de matières fibreuses passe successivement, non seulement par au moins une cellule de flottation (16) à effet sélectif fonctionnant dans le champ de gravitation terrestre, mais également par au moins un cyclone de flottation (17, 17').

14. Installation selon la revendication 13,
**caractérisée en ce que**
un dispositif de chauffage de matière (19) est prévu entre le dispositif d'épaississement (18) et le dispositif de dispersion (20).

15. Installation selon la revendication 13 ou 14,
**caractérisée en ce que**
des étages de flottation secondaires pour l'épuration de la mousse produite dans la flottation préalable et dans la flottation postérieure sont prévus, aussi bien pour la flottation préalable (4) que pour la flottation postérieure (5).

16. Installation selon la revendication 15,
**caractérisée en ce que**
au moins un étage de flottation secondaire comporte également une combinaison, aussi bien d'au moins une cellule de flottation (16') fonctionnant dans le champ de gravitation terrestre que d'au moins un cyclone de flottation (17'', 17''').
